# EUROPÄISCHE PATENTANMELDUNG

(11) **EP 3 048 510 A1**
(43) Veröffentlichungstag der Anmeldung: **27.07.2016**
(21) Anmeldenummer: 15450003.7
(22) Anmeldetag: 23.01.2015
(51) Int. Cl.: G06F 1/18, G06F 1/20

(54) **Tower-Computer und Tower-Computergehäuse zum Einbau einer Hauptplatine**

(71) Anmelder: Widler, Georg, 1220 Wien (AT)
(72) Erfinder: Widler, Georg, 1220 Wien (AT)
(74) Vertreter: Wildhack & Jellinek

(57) **Zusammenfassung**

Die Erfindung betrifft einen Tower-Computer (200) und ein Tower-Computergehäuse (210) zum Einbau einer Hauptplatine (220) sowie zumindest einer in der Hauptplatine (220) eingesteckten Erweiterungsplatine (221, 222) mit einem Steckanschluss (221a, 222a) für Verkabelung.

Erfindungsgemäß ist vorgesehen,
- dass im Tower-Computergehäuse (210) eine horizontale liegende Zwischenwand (211) vorhanden ist, die einen Unterbereich (212) vom darüber liegenden Haupt-Gehäusebereich (213) des Tower-Computergehäuses (210) abgrenzt,
- dass Mittel zur Montage der Hauptplatine (220) im Haupt-Gehäusebereich (213) vorhanden sind, mit denen die Hauptplatine (220) derart gehalten ist, dass in die Hauptplatine (220) eingesteckte Erweiterungsplatinen (221, 222) senkrecht zur Zwischenwand (211) stehen,
- dass die Zwischenwand (211) Mittel zum Befestigen von in die Hauptplatine (220) eingesteckten Erweiterungsplatinen (221, 222) aufweist, sodass die Steckanschlüsse (221 a, 222a) der Erweiterungsplatinen (221, 222) durch die Zwischenwand (211) hindurch ragen und vom Unterbereich (212) aus ansteckbar sind, und
- dass der Unterbereich (212) im Gehäuse (210) eine Auslassöffnung (214) zur Führung von Anschlusskabeln von den Steckanschlüssen (221 a, 222a) der Erweiterungsplatinen (221, 222) und/oder der Hauptplatine (220), und gegebenenfalls eines Netzteils (230), aus dem Unterbereich (212) hinaus aufweist.
- bei einem allseitig von Gehäusewänden umschlossen Tower-Computer (200) oder Tower-Computergehäuse der unterste Wandbereich (die Bodenwand) abnehmbar ist, um eine einfache Montage der Anschlusskabel an die Hauptplatine 220, die Steckkontakte 221 a, 222a und die Stromversorgung 230 zu ermöglichen.

## Beschreibung

Die Erfindung betrifft ein Tower-Computergehäuse zum Einbau einer Hauptplatine sowie zumindest einer in der Hauptplatine eingesteckten oder einsteckbaren Erweiterungsplatine gemäß dem Oberbegriff des Patentanspruchs 1.

Sofern im Zusammenhang mit dieser Anmeldung der Begriff senkrecht gemeint ist, wird hierunter ein Winkel von 90° verstanden, wobei Fertigungstoleranzen von etwa 10° ebenfalls mit umfasse sein sollen.

Weiter betrifft die Erfindung einen Tower-Computer mit einem Gehäuse, einer Hauptplatine sowie einer in die Hauptplatine eingesteckten (einsteckbaren) Erweiterungsplatine gemäß dem Oberbegriff des Patentanspruchs 2.

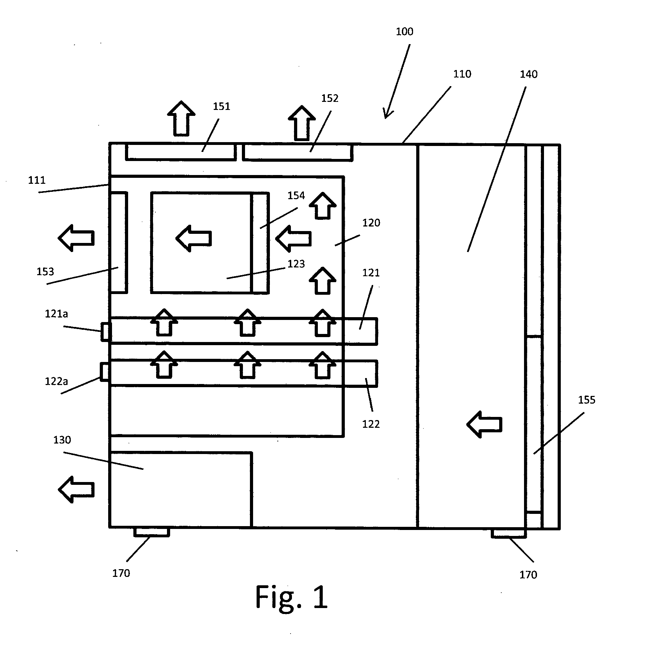

Aus dem Stand der Technik sind unterschiedliche Aufbauten von Tower-Computern bzw. Tower-Computergehäusen bekannt. Eine typische Bauform eines Tower-Computers ist in **Fig. 1** dargestellt. **Fig. 1** zeigt einen Tower-Computer 100 mit einem Gehäuse 110 mit Standfüßchen 170, in das eine Hauptplatine 120 eingebaut ist. In die Hauptplatine 120 sind zwei Erweiterungsplatinen 121, 122 eingesteckt. Im vorliegenden Fall handelt es sich bei den Erweiterungsplatinen 121, 122 um Grafikkarten. Die Grafikkarten haben in diesem Ausführungsbeispiel der Erfindung je einen Steckanschluss 121a, 122a, der mit der Rückwand 111 des Computergehäuses verbunden ist. Weiters befindet sich auf der Hauptplatine 120 ein Mikroprozessor. Schließlich verfügt der Tower-Computer 100 noch über eine Energieversorgung 130 sowie eine Anzahl von Festplatten 140 und sonstigen Laufwerken. Schließlich verfügt das dargestellte Tower-Gehäuse über eine Anzahl von Lüftern 151, 152, 153, 154. Weiters ist unmittelbar auf dem Mikroprozessor ein Kühlkörper 123 montiert, auf dem ein Lüfter befestigt ist.

Aufgrund des in **Fig. 1** dargestellten Aufbaus des Tower-Computers 100 sind die Erweiterungsplatinen 121, 122 bzw. Grafikkarten, die in der Gesamtanordnung des Tower-Computers 100 eine große Wärmequelle darstellen, waagrecht übereinander angeordnet. Aufgrund dieser waagrechten Anordnung erhitzen die weiter unten liegenden Komponenten die weiter oben liegenden Komponenten. Im vorliegenden Ausführungsbeispiel sind zwei Grafikkarten übereinander montiert. Dabei wird die Wärme der ersten Grafikkarte 121 durch Luftströmung bzw. Konvektion, dargestellt durch Pfeile, auf die zweite Grafikkarte 122 sowie auf den Kühlkörper des Prozessors 123 übertragen Weiters besteht bei der in **Fig. 1** dargestellten Ausführungsform neben dem thermischen Problem der wesentliche Nachteil, dass die an die Steckanschlüsse 121a, 122a angeschlossenen Anschlusskabel allesamt lose an der Rückseite abgeführt werden müssen, um die Steckanschlüsse 121a, 122a der Erweiterungsplatinen und des Netztteils, Soundkarte, etc. zu korltaktieren. Hierdurch wird es erforderlich, dass außerhalb des Tower-Computergehäuses ein erheblicher Platzbedarf für Verkabelung besteht.

Aufgabe der Erfindung ist es, die genannten Nachteile zu beseitigen und ein Tower-Computergehäuse bzw. einen Tower-Computer zur Verfügung zu stellen, mit dem die vorliegenden thermischen und verkabelungstechnischen Nachteile überwunden werden und die Erfindung löst diese Aufgabe bei einem Tower-Computergehäuse der eingangs genannten Art mit den kennzeichnenden Merkmalen des Patentanspruchs 1.

Weiters löst die Erfindung die Aufgabe eines Tower-Computers der eingangs genannten Art mit den kennzeichnenden Merkmalen des Patentanspruchs 2.

Vorteilhafte Ausgestaltungen der Erfindung sind in den abhängigen Ansprüchen näher dargestellt.

Die Erfindung sieht bei einem Tower-Computergehäuse zum Einbau einer Hauptplatine sowie zumindest einer in der Hauptplatine eingesteckten oder einsteckbaren Erweiterungsplatine, insbesondere einer Grafikkarte, mit jeweils zumindest einem Steckanschluss für Verkabelung vor, dass eine horizontale liegende Zwischenwand vorgesehen ist, die einen Unterbereich vom darüber liegenden Haupt-Gehäusebereich des Tower-Computergehäuses abgrenzt, dass Mittel zur Montage der Hauptplatine im Haupt-Gehäusebereich vorhanden sind, mit denen die Hauptplatine derart gehalten ist, dass in die Hauptplatine eingesteckte Erweiterungsplatinen senkrecht zur Zwischenwand stehen, dass die Zwischenwand Mittel zum Befestigen von in die Hauptplatine eingesteckten Erweiterungsplatinen aufweist, sodass die Steckanschlüsse der Erweiterungsplatinen durch die Zwischenwand hindurch ragen und vom Unterbereich aus ansteckbar sind, und dass der Unterbereich im Gehäuse eine Auslassöffnung zur Führung von Anschlusskabeln von den Steckanschlüssen der Erweiterungsplatinen und/oder der Hauptplatine, und gegebenenfalls eines Netzteils, aus dem Unterbereich hinaus aufweist. Hierdurch werden auf einfache Weise verbesserte thermische Eigenschaften erzielt und die Wärmeabfuhr der Erweiterungsplatinen und des Prozessorkühlers erheblich vereinfacht.

Weiters wird hierdurch auch die natürliche Konvektion innerhalb des Gehäuses unterstützt, wodurch auch sehr leise Rechner zB für den Bürobereich erstellt werden können, die mit nur wenigen Lüftungsöffnungen auskommen und/oder ohne elektrisch betriebene Lüfter arbeiten.

Weiters betrifft die Erfindung einen Tower-Computer umfassend ein Gehäuse, eine Hauptplatine, sowie gegebenenfalls zumindest eine vertikal stehende und in die Hauptplatine eingesteckte oder einsteckbare Erweiterungsplatine, insbesondere eine Grafikkarte, wobei die Hauptplatine und/oder eine Erweiterungsplatine zumindest einen Steckanschluss für Verkabelung aufweisen. Hierbei ist vorgesehen, dass im Gehäuse eine horizontale liegende Zwischenwand vorgesehen ist, die einen Unterbereich vom darüber liegenden Haupt-Gehäusebereich des Tower-Computergehäuses abgrenzt, und dass der Unterbereich des Gehäuses eine Auslassöffnung zur Führung von Anschlusskabeln von den Steckanschlüssen der Erweiterungsplatinen und/oder der Hauptplatine, und gegebenenfalls eines Netzteils, aus dem Unterbereich hinaus aufweist. Ein derart ausgestalteter Tower-Computer weist verbesserte thermische Eigenschaften auf und erleichtert die Abfuhr von Wärme von den Erweiterungsplatinen. Außerdem wird der Kühlkörper aus dem erwärmten Luftstrom der Erweiterungsplatinen genommen.

Zur vorteilhaften Belüftung von Erweiterungsplatinen kann vorgesehen sein, dass in die Hauptplatine zumindest eine Erweiterungsplatine eingesteckt ist, dass Mittel zur Montage der Hauptplatine im Haupt-Gehäusebereich vorhanden sind, mit denen die Hauptplatine derart gehalten ist, dass in die Hauptplatine eingesteckte Erweiterungsplatinen vertikal stehen, dass die Zwischenwand Mittel zum Befestigen von in die Hauptplatine eingesteckten Erweiterungsplatinen aufweist, sodass die Steckanschlüsse der Erweiterungsplatinen durch die Zwischenwand hindurch ragen und vom Unterbereich aus kontaktierbar sind.

Eine besonders einfache Art der Verkabelung sieht vor, dass an zumindest eine der Erweiterungsplatinen zumindest ein Anschlusskabel angesteckt ist, das durch den Unterbereich hindurch zur Auslassöffnung geführt ist.

Eine besonders bevorzugte Belüftung eines auf der Hautplatine befindlichen Prozessors kann erreicht werden, indem auf der Hauptplatine ein Prozessor mit einem darauf befindlichen Prozessorkühler angeordnet ist, auf dem ein Prozessorlüfter angeordnet ist, und in der Zwischenwand zumindest eine Lüftungsöffnung vorhanden ist, durch die Luft vom Unterbereich in den Bereich des auf der Hauptplatine befindlichen Prozessorlüfters hindurch strömen kann.

Um eine gegenseitige Erwärmung von Prozessor und Erweiterungsplatinen zu vermeiden, kann vorgesehen sein, dass der Prozessorlüfter und die Erweiterungsplatinen im vertikalen Strömungsweg vom Unterbereich des Gehäuses, insbesondere zu einer Lüftungsöffnung im oberen Bereich des Haupt-Gehäusebereichs, nebeneinander angeordnet sind.

Um einen besonders einfachen vertikalen Luftstrom durch das Tower-Computergehäuse bzw. den Tower-Computer zu erreichen, kann vorgesehen sein, dass im oberen Bereich des Gehäuses, insbesondere in der oberen Deckwand des Gehäuses, zumindest eine Lüftungsöffnung vorgesehen ist und dass an dieser Lüftungsöffnung im Inneren des Haupt-Gehäusebereich Lüftungseinheiten zum Abtransport von Luft aus dem Inneren des Haupt-Gehäusebereich durch die Lüftungsöffnung hindurch möglich sind.

Der kabelführende Unterbereich des Tower-Gehäuses bzw. des Tower-Computers kann vorteilhaft ausgestaltet werden, indem das Gehäuse im Unterbereich einen abnehmbaren Wandbereich aufweist. Alternativ kann vorgesehen sein, dass der Unterbereich oder ein Teil des Unterbereichs des Gehäuses frei von Gehäusewänden ist. Dies ermöglicht eine besonders einfache Verkabelung der Erweiterungsplatinen sowie gegebenenfalls der Hauptplatine.

Ein bevorzugtes Ausführungsbeispiel der Erfindung ist näher anhand der Zeichnungsfiguren dargestellt.

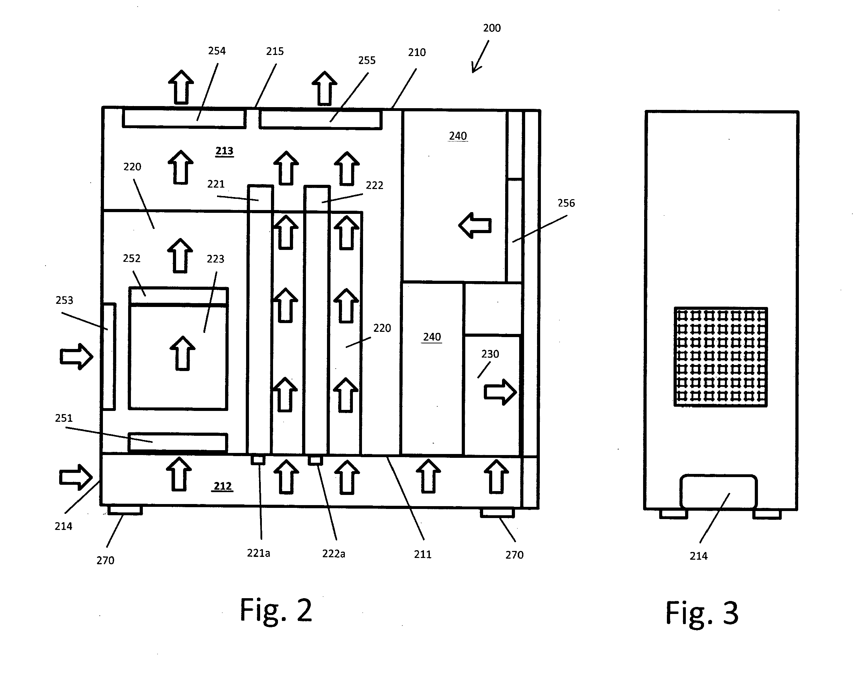

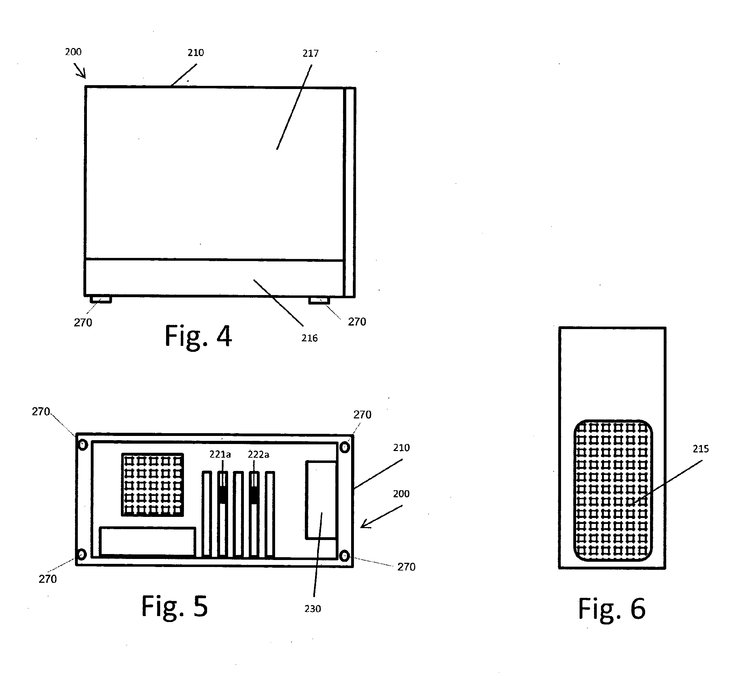

**Fig. 2** zeigt eine Ausführungsform eines erfindungsgemäßen Tower-Computers bzw. Tower-Computergehäuses von der Seite. **Fig. 3** zeigt eine Rückansicht des in **Fig. 2** dargestellten Tower-Computers bzw. Tower-Computergehäuses. **Fig. 4** zeigt die in **Fig. 2** dargestellten Tower-Computer bzw. Tower-Computergehäuse mit geschlossenem Deckel. **Fig. 5** zeigt die in **Fig. 2** dargestellten Tower-Computergehäuse und Tower-Computer von unten. **Fig. 6** zeigt den in **Fig. 2** dargestellten Tower-Computer von oben.

In **Fig. 2** ist ein Tower-Computer 200 mit einem Tower-Computergehäuse 210 dargestellt. In das Tower-Computergehäuse 210 ist eine Hauptplatine 220 eingesetzt. In diese Hauptplatine 210 sind Erweiterungsplatinen 221, 222 in Form von Grafikkarten eingebaut, die in diesem Ausführungsbeispiel senkrecht zur Hauptplatine 210 stehen. Die Erweiterungsplatinen 221, 222 weisen jeweils Steckanschlüsse 221a, 222a für eine Verkabelung auf. Das Tower-Computergehäuse 210 ist durch eine horizontal liegende Zwischenwand 211 in einen Unterbereich 212 und einen oberhalb liegenden Haupt-Gehäusebereich 213 unterteilt. Im vorliegenden Ausführungsbeispiel der Erfindung ist der Unterbereich 212 zur Führung von nicht dargestellten Anschlusskabeln vorgesehen, die an die Erweiterungsplatinen 221, 222 angesteckt sind. Der Unterbereich 212 weist eine Auslassöffnung 214 **(****Fig. 3****)** auf, durch die Anschlusskabel von den Steckanschlüssen 221a, 222a der Erweiterungsplatinen 221, 222 durch den Unterbereich hinaus führbar sind. Zudem sind bei dieser Ausführungsform der Erfindung im Unterbereich 212 Standfüßchen 270 vorgesehen. Weiters ist die Auslassöffnung 214 luftdurchlässig, sodass Luft durch die Auslassöffnung 214 in den Unterbereich 212 gelangen kann. Das Tower-Computergehäuse 210 weist Mittel zur Montage der Hauptplatine 220 im Hauptgehäusebereich 213 auf, die im vorliegenden Fall durch Schrauben realisiert sind, die die Hauptplatine 220 gegenüber dem Gehäuse 210 halten. Üblicherweise handelt es sich bei solchen Mitteln um Schrauben, die mit im Gehäuse angeordneten Gewinden zusammenwirken und dabei die Hauptplatine 220 einklemmen. Alternativ können auch im Gehäuse verankerte Zapfen zur Halterung der Hauptplatine 220 oder andere Mittel zur Halterung der Hauptplatine 220 im Gehäuse vorgesehen sein. Die Hauptplatine 220 wird von diesen Montagemitteln derart gehalten, dass die in sie eingesteckten Erweiterungsplatinen 221, 222 bei der üblichen Aufstellung des Tower-Computergehäuses 210 bzw. Tower-Computers 200 vertikal stehen.

Die Zwischenwand 211 weist ferner Mittel zum Befestigen der in die Hauptplatine 220 eingesteckten Erweiterungsplatinen 221, 222 auf. Auch hierbei kann es sich um Schrauben handeln, die mit in der Zwischenwand angeordneten Gewindebohrungen so zusammenwirken, dass die Erweiterungsplatinen 221, 222 bzw ein auf diesen befindliches Anschlussblech geklemmt wird. Daneben sind auch weitere Arten der Befestigung der Erweiterungsplatinen möglich. Die Erweiterungsplatinen stehen senkrecht zur Zwischenwand. Die Steckanschlüsse 221a, 222a der Erweiterungsplatinen 221, 222 ragen aufgrund dieser Mittel durch die Zwischenwand 211 hindurch und sind vom Unterbereich 212 aus kontaktierbar. Üblicherweise werden die Erweiterungsplatinen 221, 222 über ein Halteblech/Anschlussblech mit der Zwischenwand 211 in Verbindung gebracht. In der Zwischenwand 211 besteht eine Ausnehmung, durch die die Steckanschlüsse 221 a, 221 b durch die Zwischenwand hindurch in den Unterbereich ragen.

Weiters ist auf der Hauptplatine 220 ein Mikroprozessor angeordnet, auf dem sich ein Kühlkörper 223 befindet. Weiter sind in diesem Beispiel oberhalb und unterhalb des Mikroprozessors Lüfter 251, 252 angeordnet, die dem Kühlkörper des Mikroprozessor frische Luft zuführen bzw. die erwärmte Luft vom Kühlkörper des Mikroprozessor abführen. Der unterhalb des Mikroprozessors angeordnete Lüfter 251 liegt in dieser bevorzugten Ausführungsform der Erfindung unmittelbar an der Zwischenwand 211 an. Die Zwischenwand 211 weist im Bereich dieses Lüfters 251 eine Ausnehmung auf, durch die hindurch Luft vom Unterbereich 212 durch den Ventilator in den Bereich des Mikroprozessorskühlkörpers gelangen kann. Weiter können auch in den übrigen Gehäuseteilen Lüfter 253 vorgesehen sein, die von außen kühle Luft zum Mikroprozessor leiten können. Darüber hinaus befinden sich innerhalb des Tower-Computergehäuses 210 des Tower-Computers 200 weitere Komponenten wie Festplatten und Datenspeichereinheiten 240 sowie das Netzteil 230. Im oberen Bereich des Gehäuses sind Lüftungsöffnungen 215 vorgesehen **(****Fig. 6****),** durch die erwärmte Luft aus dem Gehäuse ausströmen kann. Die Lüftungsöffnung 215 ist durch ein Meshgitter abgedeckt. Diese Lüftungsöffnungen 215 befinden sich im vorliegenden Ausführungsbeispiel der Erfindung an der oberen Deckwand des Gehäuses 210. Im Inneren des Haupt-Gehäusebereichs 213 sind zum Abtransport von Luft aus dem Inneren des Hauptgehäusebereichs durch die Lüftungsöffnungen hindurch weitere Lüfter 254, 255 vorgesehen. Weiters sind Lüfter 256 an der Front des Gehäuses möglich.

Durch diese bevorzugte Anordnung der Komponenten des Computers 200 bzw. des Gehäuses 210 wird erreicht, dass die als Kühlmedium verwendete Luft im Gehäuse vertikal von unten nach oben strömt, wobei sie in den Unterbereich 212 des Gehäuses 210 gelangt, anschließend entweder am Mikroprozessor oder den Erweiterungsplatinen 221, 222 vertikal nach oben strömt und durch die Lüftungsöffnungen 215 im oberen Bereich des Haupt-Gehäusebereichs 213 aus dem Tower-Computergehäuse 220 ausströmt. Besonders vorteilhaft ist hierbei der Umstand, dass der Prozessorkühler 223 und die Erweiterungsplatinen 221, 222 im vertikalen Strömungsweg vom Unterbereich des Gehäuses 210 zu der Lüftungsöffnung 215 im oberen Bereich des Hauptgehäusebereichs nebeneinander angeordnet sind. Dies verhindert, dass bereits von einer der Komponenten erwärmte Luft zu einer anderen Komponente gerät und derart einen Stau erwärmter Luft im Gehäuse verursacht. Es ist selbstverständlich nicht erforderlich, dass der Strömungsweg der Luft durch das Computergehäuse an allen Stellen vertikal ist. Alternativ könnte auch vorgesehen sein, dass der Strömungsweg im oberen Bereich des Hauptgehäusebereichs horizontal verläuft und beispielsweise durch die Seitenwände oder durch die Rückwand des Gehäuses 210 aus dem Gehäuse 210 geführt wird.

Der Unterbereich 212 des Gehäuses 210 weist im vorliegenden Ausführungsbeispiel der Erfindung einen einzigen Kabel- und Lufteinlass 214 auf, durch den Luft vom Außenbereich des Computers 200 in den Unterbereich 212 eingesaugt werden kann. Es ist selbstverständlich auch möglich, dass der Unterbereich 212 vollkommen unverkleidet ist, das heißt, dass im Unterbereich keinerlei Seiten-, Vorder-, Unter- oder Rückwände vorgesehen sind und die Steckanschlüsse 221 a, 222a der Erweiterungsplatinen 221, 222 oder der Hauptplatine 220 von außen sichtbar sind. Der Lufteinlass 214 wird in diesem Fall dadurch erreicht, dass der Unterbereich 212 frei von Außenluft durchströmt werden kann und die in den Unterbereich 212 ragenden Steckanschlüsse frei von außen kontaktierbar sind. Sofern im Unterbereich 212 zum Boden hin eine Gehäuseabdeckung vorhanden ist, ist diese vorteilhafterweise in Form eines Bodendeckels separat abnehmbar, um eine einfache Verkabelung mit Anschlusskabeln zu erreichen.

Wie in **Fig. 4** dargestellt, besteht bei einer bevorzugten Ausführungsform der Erfindung die Möglichkeit, dass die Gehäuseabdeckungen 216, 217 des Unterbereichs 212 sowie des Hauptgehäusebereichs 213 separat ausgebildet und separat abnehmbar sind. Die obere Gehäuseabdeckung 217 reicht in diesem Fall bis zur Zwischenwand 211 und schließt den Haupt-Gehäusebereich 213 ab. Die untere Gehäuseabdeckung 216 umgibt seitlich den Unterbereich 212 und schließt diesen ab. Allenfalls kann die untere Gehäuseabdeckung 216 auch durch eine Anzahl von Seitenwandabdeckungen ausgebildet sein.

In **Fig. 5** ist der in **Fig. 2** bis **Fig. 4** dargestellte Tower-Computer von unten näher gezeigt. Hierbei wird ersichtlich, dass die Zwischenwand 211 eine Anschlusskonfiguration aufweist, die einer Gehäuserückwand konventioneller Tower-Computer entspricht. Alternativ ist es selbstverständlich auch möglich, das Netzteil sowie die einzelnen Festplatten im hinteren Bereich des Gehäuses zu positionieren und die Hauptplatine 220 und die Erweiterungsplatinen 221, 222 im vorderen Teil des Haupt-Gehäusebereichs 213 zu platzieren. In diesem Fall kann vorgesehen sein, dass allfällige Datenträger-Laufwerke wie zB CD-Laufwerke oberhalb des Gehäuses angeordnet sind, um das Einlegen der Datenträger zu ermöglichen.

Neben der dargestellten Belüftung kann in jedem Fall eine Belüftung durch alle montierten Seitendeckel des Tower-Computergehäuse (210) oder Tower-Computer (200) erfolgen.

## Patentansprüche

1. Tower-Computergehäuse (210) zum Einbau einer Hauptplatine (220) sowie zumindest einer in der Hauptplatine (220) eingesteckten oder einsteckbaren Erweiterungsplatine (221, 222), insbesondere einer Grafikkarte, mit jeweils zumindest einem Steckanschluss (221 a, 222a) für Verkabelung,
**dadurch gekennzeichnet,**
- dass im Tower-Computergehäuse (210) eine horizontale liegende Zwischenwand (211) vorhanden ist, die einen Unterbereich (212) vom darüber liegenden Haupt-Gehäusebereich (213) des Tower-Computergehäuses (210) abgrenzt,
- dass Mittel zur Montage der Hauptplatine (220) im Haupt-Gehäusebereich (213) vorhanden sind, mit denen die Hauptplatine (220) derart gehalten ist, dass in die Hauptplatine (220) eingesteckte Erweiterungsplatinen (221, 222) senkrecht zur Zwischenwand (211) stehen,
- dass die Zwischenwand (211) Mittel zum Befestigen von in die Hauptplatine (220) eingesteckten Erweiterungsplatinen (221, 222) aufweist, sodass die Steckanschlüsse (221 a, 222a) der Erweiterungsplatinen (221, 222) durch die Zwischenwand (211) hindurch ragen und vom Unterbereich (212) aus ansteckbar sind, und
- dass der Unterbereich (212) im Gehäuse (210) eine Auslassöffnung (214) zur Führung von Anschlusskabeln von den Steckanschlüssen (221 a, 222a) der Erweiterungsplatinen (221, 222) und/oder der Hauptplatine (220), und gegebenenfalls eines Netzteils (230), aus dem Unterbereich (212) hinaus aufweist.

2. Tower-Computer (200) umfassend
- ein Gehäuse (210),
- eine Hauptplatine (220), sowie
- gegebenenfalls zumindest eine senkrecht stehende und in die Hauptplatine (220) eingesteckte Erweiterungsplatine (221, 222), insbesondere eine Grafikkarte,
- wobei die Hauptplatine (220) und/oder eine Erweiterungsplatine (221, 222) zumindest einen Steckanschluss (221a, 222a) für Verkabelung aufweisen,
**dadurch gekennzeichnet,**
- dass im Gehäuse (210) eine horizontale liegende Zwischenwand (211) vorgesehen ist, die einen Unterbereich (212) vom darüber liegenden Haupt-Gehäusebereich (213) des Tower-Computergehäuses (210) abgrenzt, und
- dass der Unterbereich (212) des Gehäuses (210) eine Auslassöffnung (214) zur Führung von Anschlusskabeln von den Steckanschlüssen (221a, 222a) der Erweiterungsplatinen (221, 222) und/oder der Hauptplatine (220), und gegebenenfalls eines Netzteils (230), aus dem Unterbereich (212) hinaus aufweist.

3. Tower-Computer nach Anspruch 2, **dadurch gekennzeichnet, dass** in die Hauptplatine (220) zumindest eine Erweiterungsplatine (221, 222) eingesteckt ist,
- dass Mittel zur Montage der Hauptplatine (220) im Haupt-Gehäusebereich (213) vorhanden sind, mit denen die Hauptplatine (220) derart gehalten ist, dass in die Hauptplatine (220) eingesteckte Erweiterungsplatinen (221, 222) vertikal stehen,
- dass die Zwischenwand (211) Mittel zum Befestigen von in die Hauptplatine (220) eingesteckten Erweiterungsplatinen (221, 222) aufweist, sodass
die Erweiterungsplatinen senkrecht zur Zwischenwand stehen und die Steckanschlüsse (221 a, 222a) der Erweiterungsplatinen (221, 222) durch die Zwischenwand (211) hindurch ragen und vom Unterbereich (212) aus kontaktierbar sind.

4. Tower-Computer nach Anspruch 2 oder 3, **dadurch gekennzeichnet, dass** an zumindest eine der Erweiterungsplatinen (221, 222) zumindest ein Anschlusskabel angesteckt ist, das durch den Unterbereich (212) hindurch zur Auslassöffnung (214) geführt ist.

5. Tower-Computergehäuse (210) oder Tower-Computer (200) nach einem der vorangehenden Ansprüche, **dadurch gekennzeichnet, dass**
- auf der Hauptplatine (220) ein Prozessor mit einem darauf befindlichen Prozessorkühler (223) angeordnet ist, auf dem optional ein oder mehrere Lüfter angeordnet sind, und
- in der Zwischenwand (211) zumindest eine Lüftungsöffnung vorhanden ist, durch die Luft vom Unterbereich (212) in den Bereich des Prozessorkühlers (223) hindurch strömen kann.

6. Tower-Computergehäuse (210) oder Tower-Computer (200) nach Anspruch 5, **dadurch gekennzeichnet, dass** der Kühlkörper des Mikroprozessors bzw. die Lüfter des Prozessorkühlkörpers und die Erweiterungsplatinen (221, 222) im vertikalen Strömungsweg vom Unterbereich (212) des Gehäuses (210), insbesondere zu einer Lüftungsöffnung (215) im oberen Bereich des Haupt-Gehäusebereichs (213), nebeneinander angeordnet sind.

7. Tower-Computergehäuse (210) oder Tower-Computer (200) nach einem der vorangehenden Ansprüche, **dadurch gekennzeichnet, dass** im oberen Bereich des Gehäuses (210), insbesondere in der oberen Deckwand des Gehäuses, zumindest eine Lüftungsöffnung (215) vorgesehen ist und dass an dieser Lüftungsöffnung (215) im Inneren des Haupt-Gehäusebereich (213) Lüftungseinheiten (254, 255) zum Abtransport von Luft aus dem Inneren des Haupt-Gehäusebereich durch die Lüftungsöffnung hindurch vorgesehen sind.

8. Tower-Computergehäuse (210) oder Tower-Computer (200) nach einem der vorangehenden Ansprüche, **dadurch gekennzeichnet**,
- dass das Gehäuse (210) im Unterbereich (212) einen abnehmbaren Wandbereich aufweist oder
- der unterste Wandbereich ganz oder teilweise abnehmbar ist oder
- dass der Unterbereich (212) oder ein Teil des Unterbereichs (212) des Gehäuses (210) frei von Gehäusewänden ist.
